# EUROPEAN PATENT APPLICATION

(11) **EP 3 496 306 A1**
(43) Date of publication of application: **12.06.2019**
(21) Application number: 16912360.1
(22) Date of filing: 12.08.2016
(51) Int. Cl.: H04L 1/00

(54) **PHYSICAL CHANNEL SENDING METHOD, RECEIVING METHOD, TERMINAL DEVICE AND NETWORK DEVICE**

(71) Applicant: Huawei Technologies Co., Ltd., Longgang District Shenzhen, Guangdong 518129 (CN)
(72) Inventor: LI, Chaojun, Shenzhen Guangdong 518129 (CN); SHAO, Jiafeng, Shenzhen Guangdong 518129 (CN)
(74) Representative: Maiwald Patent- und Rechtsanwaltsgesellschaft mbH
(86) International application number: PCT/CN2016/094883
(87) International publication number: WO 2018/027905

(57) **Abstract**

This application provides a physical channel sending method and receiving method, a terminal device, and a network device. The physical channel sending method includes: generating, by a terminal device, a physical channel, where the physical channel includes N physical channel units, and N is a positive integer; and sending, by the terminal device, the physical channel in a first time domain resource, where the first time domain resource includes M time intervals, the N physical channel units are located in N time intervals of the M time intervals, and M is a positive integer greater than or equal to N. According to the method and wireless communications devices provided in this application, a radio resource can be effectively multiplexed, thereby reducing a radio resource waste.

## Description

### TECHNICAL FIELD

This application relates to the field of wireless communications, and in particular, to a physical channel sending method and receiving method, a terminal device, and a network device.

### BACKGROUND

In a wireless communications system, a latency (latency) is an important factor that affects user experience. In addition, continuously emerging new services, such as Internet of Vehicles related services, pose an increasingly high requirement on the latency. Therefore, in an existing Long Term Evolution (long term evolution, LTE for short) system, a transmission mechanism based on a transmission time interval (transmission time interval, TTI for short) of one subframe already cannot meet a requirement of a low-latency service. To reduce the latency, TTI lengths of a physical downlink shared channel (physical downlink shared channel, PDSCH for short), a physical uplink shared channel (physical uplink shared channel, PUSCH for short), and a physical channel (physical uplink control channel, PUCCH for short) need to be shortened from a subframe to a slot level, or even to a symbol level.

The PUCCH is used to carry uplink control information (uplink control information, UCI for short). The UCI includes at least one piece of the following information: channel state information (channel state information, CSI for short), hybrid automatic repeat request-acknowledgement (hybrid automatic repeat request-acknowledgement, HARQ-ACK for short) information, and a scheduling request (scheduling request, SR for short). To match different UCI bit quantity and coverage requirements, a plurality of TTI lengths need to exist in the wireless communications system.

When PUCCHs of a plurality of TTI lengths exist in the wireless communications system, how to transmit the PUCCHs to effectively multiplex a radio resource, that is, to reduce a radio resource waste, becomes a technical problem that needs to be resolved.

### SUMMARY

This application provides a physical channel sending method and receiving method, a terminal device, and a network device, to reduce a resource waste caused when there are a plurality of physical channels of different TTI lengths in a wireless communications system.

According to a first aspect, this application provides a physical channel sending method, where the method includes: generating, by a terminal device, a physical channel, where the physical channel includes N physical channel units, and N is a positive integer; and sending, by the terminal device, the physical channel in a first time domain resource, where the first time domain resource includes M time intervals, the N physical channel units are located in N time intervals of the M time intervals, and M is a positive integer greater than or equal to N.

With reference to the first aspect, in a first possible implementation of the first aspect, before the generating, by a terminal device, a physical channel, the method further includes: receiving, by the terminal device, first configuration information, where the first configuration information indicates a value of N.

With reference to the first aspect or the first possible implementation of the first aspect, in a second possible implementation of the first aspect, the first time domain resource is a first sub frame, the first subframe includes six time intervals, and in the six time intervals: a time interval 0 includes symbol 0 and symbol 1 in the first sub frame; a time interval 1 includes symbol 2 and symbol 3 in the first sub frame; a time interval 2 includes symbol 4, symbol 5, and symbol 6 in the first sub frame; a time interval 3 includes symbol 7 and symbol 8 in the first sub frame; a time interval 4 includes symbol 9 and symbol 10 in the first subframe; and a time interval 5 includes symbol 11, symbol 12, and symbol 13 in the first subframe, or the time interval 5 includes symbol 11 and symbol 12 in the first subframe.

With reference to the second possible implementation of the first aspect, in a third possible implementation of the first aspect, the generating, by a terminal device, a physical channel includes: generating, by the terminal device, a physical channel whose channel structure is a first structure, a second structure, or a third structure, where in the first structure, the physical channel includes one physical channel unit that is located in one of the six time intervals; in the second structure, the physical channel includes two physical channel units that are located in the time interval 0 and the time interval 1, or the physical channel includes one physical channel unit that is located in the time interval 2, or the physical channel includes two physical channel units that are located in the time interval 3 and the time interval 4, or the physical channel includes one physical channel unit that is located in the time interval 5; and in the third structure, the physical channel includes three physical channel units that are located in the time interval 0, the time interval 1, and the time interval 2, or the physical channel includes three physical channel units that are located in the time interval 3, the time interval 4, and the time interval 5.

With reference to the first aspect or the first possible implementation of the first aspect, in a fourth possible implementation of the first aspect, the first time domain resource is a first subframe, the first subframe includes eight time intervals, and in the eight time intervals: the time interval 0 includes symbol 0 and symbol 1 in the first subframe; the time interval 1 includes symbol 2 and symbol 3 in the first subframe; the time interval 2 includes symbol 3 and symbol 4 in the first subframe; the time interval 3 includes symbol 5 and symbol 6 in the first subframe; the time interval 4 includes symbol 7 and symbol 8 in the first subframe; the time interval 5 includes symbol 9 and symbol 10 in the first subframe; the time interval 6 includes symbol 10 and symbol 11 in the first subframe; and the time interval 7 includes symbol 12 and symbol 13 in the first subframe, where symbol 3 is used to transmit reference signals of the time interval 1 and the time interval 2, and symbol 10 is used to transmit reference signals of the time interval 5 and the time interval 6.

With reference to the fourth possible implementation of the first aspect, in a fifth possible implementation of the first aspect, the generating, by a terminal device, a physical channel includes: generating, by the terminal device, a physical channel whose channel structure is a first structure, a second structure, or a third structure, where in the first structure, the physical channel includes one physical channel unit that is located in one of the eight time intervals; in the second structure, the physical channel includes two physical channel units that are located in the time interval 0 and the time interval 1, or the physical channel includes two physical channel units that are located in the time interval 2 and the time interval 3, or the physical channel includes two physical channel units that are located in the time interval 4 and the time interval 5, or the physical channel includes two physical channel units that are located in the time interval 6 and the time interval 7; and in the third structure, the physical channel includes four physical channel units that are located in the time interval 0, the time interval 1, the time interval 2, and the time interval 3, or the physical channel includes four physical channel units that are located in the time interval 4, the time interval 5, the time interval 6, and the time interval 7.

With reference to the first aspect or the first possible implementation of the first aspect, in a sixth possible implementation of the first aspect, the first time domain resource is a first subframe, the first subframe includes seven time intervals, and in the seven time intervals: the time interval 0 includes symbol 0 and symbol 1 in the first subframe; the time interval 1 includes symbol 2 and symbol 3 in the first subframe; the time interval 2 includes symbol 3 and symbol 4 in the first subframe; the time interval 3 includes symbol 5 and symbol 6 in the first subframe; the time interval 4 includes symbol 7 and symbol 8 in the first subframe; the time interval 5 includes symbol 9 and symbol 10 in the first subframe; and the time interval 6 includes symbol 10, symbol 11, and symbol 12 in the first subframe, where symbol 3 is used to transmit reference signals of the time interval 1 and the time interval 2, and symbol 10 is used to transmit reference signals of the time interval 5 and the time interval 6.

With reference to the sixth possible implementation of the first aspect, in a seventh possible implementation of the first aspect, the generating, by a terminal device, a physical channel includes: generating, by the terminal device, a physical channel whose channel structure is a first structure, a second structure, or a third structure, where in the first structure, the physical channel includes one physical channel unit that is located in one of the seven time intervals; in the second structure, the physical channel includes two physical channel units that are located in the time interval 0 and the time interval 1, or the physical channel includes two physical channel units that are located in the time interval 2 and the time interval 3, or the physical channel includes two physical channel units that are located in the time interval 4 and the time interval 5, or the physical channel includes one physical channel unit that is located in the time interval 6; and in the third structure, the physical channel includes four physical channel units that are located in the time interval 0, the time interval 1, the time interval 2, and the time interval 3, or the physical channel includes three physical channel units that are located in the time interval 4, the time interval 5, and the time interval 6.

With reference to the first aspect or the first possible implementation of the first aspect, in an eighth possible implementation of the first aspect, the first time domain resource is a first subframe, the first subframe may include five time intervals, and in the five time intervals: the time interval 0 includes symbol 0 and symbol 1 in the first subframe; the time interval 1 includes symbol 2 and symbol 3 in the first subframe; the time interval 2 includes symbol 4, symbol 5, and symbol 6 in the first subframe; the time interval 3 includes symbol 7, symbol 8, and symbol 9 in the first subframe; and the time interval 4 includes symbol 10, symbol 11, and symbol 12 in the first subframe.

With reference to the eighth possible implementation of the first aspect, in a ninth possible implementation of the first aspect, the generating, by a terminal device, a physical channel includes: generating, by the terminal device, a physical channel whose channel structure is a first structure, a second structure, or a third structure, where in the first structure, the physical channel includes one physical channel unit that is located in one of the five time intervals; in the second structure, the physical channel includes two physical channel units that are located in the time interval 0 and the time interval 1, or the physical channel includes one physical channel unit that is located in the time interval 2, or the physical channel includes one physical channel unit that is located in the time interval 3, or the physical channel includes one physical channel unit that is located in the time interval 4; and in the third structure, the physical channel includes three physical channel units that are located in the time interval 0, the time interval 1, and the time interval 2, or the physical channel includes two physical channel units that are located in the time interval 3 and the time interval 4.

With reference to the first aspect or the first possible implementation of the first aspect, in a tenth possible implementation of the first aspect, the first time domain resource is a first subframe, the first subframe may include six time intervals, and in the six time intervals: the time interval 0 includes symbol 0 and symbol 1 in the first subframe; the time interval 1 includes symbol 2 and symbol 3 in the first subframe; the time interval 2 includes symbol 3 and symbol 4 in the first subframe; the time interval 3 includes symbol 5 and symbol 6 in the first subframe; the time interval 4 includes symbol 7, symbol 8, and symbol 9 in the first subframe; and the time interval 5 includes symbol 10, symbol 11, and symbol 12 in the first subframe.

With reference to the tenth possible implementation of the first aspect, in an eleventh possible implementation of the first aspect, the generating, by a terminal device, a physical channel includes: generating, by the terminal device, a physical channel whose channel structure is a first structure, a second structure, or a third structure, where in the first structure, the physical channel includes one physical channel unit that is located in one of the six time intervals; in the second structure, the physical channel includes two physical channel units that are located in the time interval 0 and the time interval 1, or the physical channel includes two physical channel units that are located in the time interval 2 and the time interval 3, or the physical channel includes one physical channel unit that is located in the time interval 4, or the physical channel includes one physical channel unit that is located in the time interval 5; and in the third structure, the physical channel includes four physical channel units that are located in the time interval 0, the time interval 1, the time interval 2, and the time interval 3, or the physical channel includes two physical channel units that are located in the time interval 4 and the time interval 5.

With reference to any one of the third, fifth, seventh, ninth, or eleventh possible implementation of the first aspect, in a twelfth possible implementation of the first aspect, before the generating, by a terminal device, a physical channel, the method further includes: receiving, by the terminal device, second configuration information, where the second configuration information indicates a channel structure of the physical channel, and the channel structure is the first structure, the second structure, or the third structure. The generating, by a terminal device, a physical channel includes: generating, by the terminal device, the physical channel based on the channel structure that is indicated by the second configuration information.

With reference to any one of the first aspect, or the first to the twelfth possible implementations of the first aspect, in a thirteenth possible implementation of the first aspect, N is greater than 1, and uplink control information carried by all the N physical channel units is the same; or the N physical channel units respectively carry N pieces of coded information of uplink control information.

With reference to the first aspect and the first to the thirteenth possible implementations of the first aspect, the physical channel is a PUCCH or a PUSCH, and before the generating, by a terminal device, a physical channel, the method further includes: receiving, by the terminal device, a PDSCH in a second time domain resource. The second time domain resource includes Q time intervals, the PDSCH is located in one of the Q time intervals, and Q is 7, 6, or 5. The terminal device sends the physical channel in the N time intervals of the M time intervals in the first time domain resource, where the physical channel is used to carry HARQ-ACK feedback information of the PDSCH, namely, receiving status information of the PDSCH.

Optionally, the second time domain resource is a second sub frame, Q is equal to 7, and in six time intervals of the second subframe: a time interval 0 includes symbol 0 and symbol 1 in the second subframe; a time interval 1 includes symbol 2 and symbol 3 in the second subframe; a time interval 2 includes symbol 4 and symbol 5 in the second subframe; a time interval 3 includes symbol 6 and symbol 7 in the second subframe; a time interval 4 includes symbol 8 and symbol 9 in the second subframe; a time interval 5 includes symbol 10 and symbol 11 in the second subframe; and a time interval 6 includes symbol 12 and symbol 13 in the second subframe.

The PDSCH is located in the time interval 0 and/or the time interval 1 of the second subframe, the physical channel is located in the time interval 5 of the first subframe, the first subframe is uplink subframe n-1, and the second subframe is downlink subframe n-1; or the PDSCH is located in the time interval 2 of the second subframe, the physical channel is located in the time interval 0 of the first subframe, the first subframe is uplink subframe n, and the second subframe is downlink subframe n-1; or the PDSCH is located in the time interval 3 of the second subframe, the physical channel is located in the time interval 1 of the first subframe, the first subframe is uplink subframe n, and the second subframe is downlink subframe n-1; or the PDSCH is located in the time interval 4 of the second subframe, the physical channel is located in the time interval 2 of the first subframe, the first subframe is uplink subframe n, and the second subframe is downlink subframe n-1; or the PDSCH is located in the time interval 5 of the second subframe, the physical channel is located in the time interval 3 of the first subframe, the first subframe is uplink subframe n, and the second subframe is downlink subframe n-1; or the PDSCH is located in the time interval 6 of the second subframe, the physical channel is located in the time interval 4 of the first subframe, the first subframe is uplink subframe n, and the second subframe is downlink subframe n-1.

Optionally, the second time domain resource is a second subframe, Q is equal to 6, and in six time intervals of the second subframe: a time interval 0 includes symbol 0, symbol 1, and symbol 2 in the second subframe; a time interval 1 includes symbol 3 and symbol 4 in the second subframe; a time interval 2 includes symbol 5 and symbol 6 in the second subframe; a time interval 3 includes symbol 7, symbol 8, and symbol 9 in the second subframe; a time interval 4 includes symbol 10 and symbol 11 in the second subframe; and a time interval 5 includes symbol 12 and symbol 13 in the second subframe.

Alternatively, in six time intervals of the second subframe: a time interval 0 includes symbol 0, symbol 1, symbol 2, and symbol 3 in the second subframe, or a time interval 0 includes symbol 1, symbol 2, and symbol 3 in the second subframe, or a time interval 0 includes symbol 2 and symbol 3 in the second subframe; a time interval 1 includes symbol 4 and symbol 5 in the second subframe; a time interval 2 includes symbol 6 and symbol 7 in the second subframe; a time interval 3 includes symbol 8 and symbol 9 in the second subframe; a time interval 4 includes symbol 10 and symbol 11 in the second subframe; and a time interval 5 includes symbol 12 and symbol 13 in the second subframe.

The PDSCH is located in the time interval 0 of the second subframe, the physical channel is located in the time interval 5 of the first subframe, the first subframe is uplink subframe n-1, and the second subframe is downlink subframe n-1; or the PDSCH is located in the time interval 0 of the second subframe, the physical channel is located in the time interval 0 of the first subframe, the first subframe is uplink subframe n, and the second subframe is downlink subframe n-1; or the PDSCH is located in the time interval 1 of the second subframe, the physical channel is located in the time interval 0 or 1 of the first subframe, the first subframe is uplink subframe n, and the second subframe is downlink subframe n-1; or the PDSCH is located in the time interval 2 of the second subframe, the physical channel is located in the time interval 1 or 2 of the first subframe, the first subframe is uplink subframe n, and the second subframe is downlink subframe n-1; or the PDSCH is located in the time interval 3 of the second subframe, the physical channel is located in the time interval 2 or 3 of the first subframe, the first subframe is uplink subframe n, and the second subframe is downlink subframe n-1; or the PDSCH is located in the time interval 4 of the second subframe, the physical channel is located in the time interval 3 or 4 of the first subframe, the first subframe is uplink subframe n, and the second subframe is downlink subframe n-1; or the PDSCH is located in the time interval 5 of the second subframe, the physical channel is located in the time interval 4 or 5 of the first subframe, the first subframe is uplink subframe n, and the second subframe is downlink subframe n-1.

According to a second aspect, this application further provides a physical channel receiving method, including: receiving, by a network device, a physical channel in a first time domain resource, where the physical channel includes N physical channel units, and N is a positive integer; and demodulating, by the network device, the physical channel, where the first time domain resource includes M time intervals, the N physical channel units are located in N time intervals of the M time intervals, and M is a positive integer greater than or equal to N.

With reference to the second aspect, in a first possible implementation of the second aspect, before the receiving, by a network device, a physical channel in a first time domain resource, the method further includes: sending, by the network device, first configuration information, where the first configuration information indicates a value of N.

With reference to the second aspect, in a second possible implementation of the second aspect, before the receiving, by a network device, a physical channel in a first time domain resource, the method further includes: sending, by the network device, second configuration information, where the second configuration information indicates a channel structure of the physical channel, and the channel structure is a first structure, a second structure, or a third structure. For detailed content of the first structure, the second structure, and the third structure, refer to related content in the first aspect. Details are not described herein again.

With reference to any one of the second aspect, or the first to the second possible implementation of the second aspect, in a third possible implementation of the second aspect, the physical channel is a PUCCH or a PUSCH, and before the receiving, by a network device, a physical channel in a first time domain resource, the method further includes: sending, by the network device, a PDSCH in a second time domain resource. The second time domain resource includes Q time intervals, the PDSCH is located in one of the Q time intervals, and Q is 7, 6, or 5. The network device receives the physical channel in the N time intervals of the M time intervals in the first time domain resource, where the physical channel is used to carry HARQ-ACK feedback information of the PDSCH, namely, receiving status information of the PDSCH. For timing between the PDSCH and the physical channel, refer to related content in the first aspect. Details are not described herein again.

With reference to the third possible implementation of the second aspect, in a fourth possible implementation of the second aspect, the network device receives a first physical channel and a second physical channel in the first time domain resource, where the second physical channel includes P physical channel units, and the P physical channel units are located in P time intervals of the M time intervals. P is greater than or equal to N, P is less than or equal to M, and the P time intervals include the N time intervals. Time-frequency domain resources that are occupied by the first physical channel and the second physical channel partially overlap, and the first physical channel and the second physical channel use different cyclic shifts.

With reference to the third possible implementation of the second aspect, in a fifth possible implementation of the second aspect, the network device receives a first physical channel in the first time domain resource, and further receives at least one of a second physical channel, a third physical channel, and a fourth physical channel. The first physical channel is located in a time interval i and a frequency domain resource A, the second physical channel is located in a time interval j and the frequency domain resource A, the third physical channel is located in a time interval k and a frequency domain resource B, where i, j, and k are different from each other and are integers from 0 to M-1, and the frequency domain resource A and the frequency domain resource B are different. The fourth physical channel occupies the time interval i, the time interval j, and the time interval k, and the fourth physical channel is located in the frequency domain resource B in the time intervals i and j and is located in the frequency domain resource A in the time interval k. Alternatively, the fourth physical channel occupies the time interval i and the time interval k, and the fourth physical channel is located in the frequency domain resource B in the time interval i and is located in the frequency domain resource A in the time interval k.

According to a third aspect, this application further provides a terminal device, where the terminal device may include a unit or module that is configured to perform the method in the first aspect or the implementations of the first aspect.

According to a fourth aspect, this application further provides a network device, where the terminal device may include a unit or module that is configured to perform the method in the first aspect or the implementations of the first aspect.

According to the method and wireless communications devices provided in this application, a radio resource can be effectively multiplexed, thereby reducing a radio resource waste.

### BRIEF DESCRIPTION OF DRAWINGS

To describe the technical solutions in this application more clearly, the following briefly describes the accompanying drawings required for describing the embodiments. Apparently, a person of ordinary skill in the art may derive other drawings from these accompanying drawings without creative efforts.
FIG. 1 is a schematic flowchart of an embodiment of a physical channel sending method according to this application;
FIG. 2 is a schematic diagram of a time interval included in a first time domain resource according to this application;
FIG. 3 is a schematic diagram of a time interval included in a first time domain resource according to this application;
FIG. 4 is a schematic diagram of a time interval included in a first time domain resource according to this application;
FIG. 5 is a schematic diagram of a time interval included in a first time domain resource according to this application;
FIG. 6 is a schematic diagram of a time interval included in a first time domain resource according to this application;
FIG. 7 is a schematic diagram of a time interval included in a first time domain resource according to this application;
FIG. 8 is a schematic diagram of a time interval included in a first time domain resource according to this application;
FIG. 9 is a schematic diagram of a correspondence between a physical downlink shared channel and a physical channel according to this application;
FIG. 10 is a schematic flowchart of an embodiment of a physical channel receiving method according to this application;
FIG. 11 is a schematic structural diagram of an embodiment of a wireless communications device according to this application; and
FIG. 12 is a schematic structural diagram of another embodiment of a wireless communications device according to this application.

### DESCRIPTION OF EMBODIMENTS

Embodiments of the present invention may be applied to various communications systems, such as an LTE system, or other wireless communications systems that use various radio access technologies, for example, a system that uses an access technology such as Code Division Multiple Access, Frequency Division Multiple Access, Time Division Multiple Access, orthogonal frequency division multiple access, or single carrier frequency division multiple access, or a subsequent evolved system such as a 5th generation 5G system.

The embodiments of the present invention may be applied to a wireless communications system that includes a network device and a terminal device (terminal device or terminal equipment). Specifically, the embodiments of the present invention may be applied to data transmission between the terminal device and the network device, data transmission between terminal devices, or data transmission between network devices. The terminal device may be a device that provides a user with voice and/or data connectivity, a handheld device having a wireless connection function, or another processing device connected to a wireless modem. A wireless terminal may communicate with one or more core networks through a radio access network (radio access network, RAN for short). The wireless terminal may be a mobile terminal, such as a mobile phone (or referred to as a "cellular" phone) and a computer having a mobile terminal, or may be, for example, a portable, pocket-sized, handheld, computer built-in, or in-vehicle mobile apparatus that exchanges voice and data with the radio access network. For example, the wireless terminal may be a device such as a personal communication service (personal communication service, PCS for short) phone, a cordless phone, a Session Initiation Protocol (session initiation protocol, SIP for short) phone, a wireless local loop (wireless local loop, WLL for short) station, or a personal digital assistant (personal digital assistant, PDA for short). The wireless terminal may also be referred to as a system, a subscriber unit (subscriber unit, SU for short), a subscriber station (subscriber station, SS for short), a mobile station (mobile station, MS for short), a remote station (remote station, RS for short), an access point (access point, AP for short), a remote terminal (remote terminal, RT for short), an access terminal (access terminal, AT for short), a user terminal (user terminal, UT for short), a user agent (user agent, UA for short), a user device, or user equipment (user equipment, UE for short). The network device may be a base station, an enhanced base station, a relay having a scheduling function, a device having a base station function, or the like. The base station may be an evolved NodeB (evolved NodeB, eNB or e-NodeB for short) in an LTE system, or a base station in another system. This is not limited in the embodiments of the present invention.

In an existing LTE system, each radio frame includes 10 subframes (subframe), and each subframe has a length of 1 ms and includes two slots (slot). In a future evolved system, to reduce a latency (latency), a length of a subframe may be shortened. For example, the length of each subframe is shortened to 0.2 ms, 0.25 ms, or shorter.

The present invention imposes no limitation on a time length of a subframe and a time length of a symbol. Generally, one subframe includes N symbols (where N is a positive integer). To be specific, one uplink subframe includes N uplink symbols, or one downlink subframe includes N downlink symbols. For example, in the existing LTE system, for a normal cyclic prefix (normal cyclic prefix, normal CP for short), each slot includes seven symbols (symbol), and each subframe includes 14 symbols. To be specific, each subframe includes symbols whose sequence numbers are respectively #0, #1, #2, #3, #4, #5, #6, #7, #8, #9, #10, #11, #12, and #13. For an extended cyclic prefix (extended cyclic prefix, extended CP for short), each slot includes six symbols, and each subframe includes 12 symbols. To be specific, each subframe includes symbols whose sequence numbers are respectively #0, #1, #2, #3, #4, #5, #6, #7, #8, #9, #10, and #11.

In the present invention, "n" in subframe n is a subframe number. Subframe n-a is the a^{th} subframe before subframe n. To be specific, subframe n-a is the a^{th} subframe counted backward from subframe n. For example, based on a frame structure of the existing LTE system, if n=4 and a=1, subframe n-a is subframe 3 in a radio frame in which subframe n is located; or if n=0 and a=2, subframe n-a is subframe 8 in a radio frame previous to a radio frame in which subframe n is located.

In the embodiments of the present invention, both an uplink symbol and a downlink symbol are briefly referred to as a symbol. The uplink symbol is referred to as a single carrier frequency division multiple access (single carrier-frequency division multiple access, SC-FDMA) symbol, and the downlink symbol is referred to as an orthogonal frequency division multiplexing (orthogonal frequency division multiplexing, OFDM) symbol. It should be noted that, if a new uplink multiple access manner or downlink multiple access manner is introduced into a subsequent technology, the uplink symbol or the downlink symbol can still be referred to as a symbol. The uplink multiple access manner and the downlink multiple access manner are not limited in the embodiments of the present invention.

In the embodiments of this application, a physical channel may be a physical channel that is used to transmit uplink data. For example, the physical channel is a PUCCH, or the physical channel is a physical uplink shared channel (physical uplink shared channel, PUSCH for short).

The physical channel is located in a first time domain resource, the first time domain resource includes M time intervals, and the M time intervals may be respectively denoted as a time interval 0 to a time interval M-1. M is a positive integer greater than or equal to N. Generally, the first time domain resource may be a time domain resource of any time length. Optionally, the first time domain resource is a time domain resource of a 1 ms time length. Optionally, the first time domain resource is a first subframe.

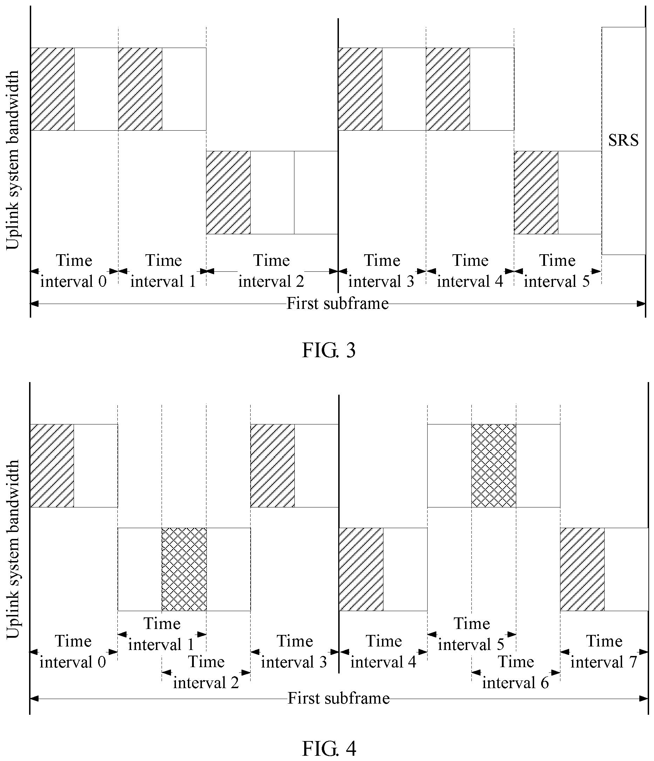

Optionally, as shown in FIG. 4, FIG. 5, FIG. 6, and FIG. 8, in the M time intervals, at least two consecutive time intervals overlap in one symbol, and the overlapped symbol is used to transmit a reference signal. If one terminal device sends two physical channels in two consecutive time intervals that overlap at one symbol, one reference signal that is transmitted on the overlapped symbol is used to demodulate the two physical channels. If two terminal devices send two physical channels in two consecutive time intervals that overlap in one symbol, two reference signals that are transmitted on the overlapped symbol are respectively used to demodulate the two physical channels.

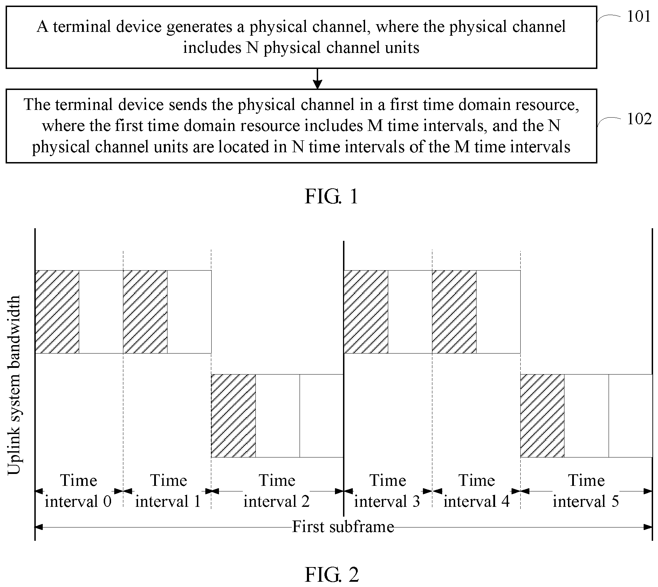

FIG. 1 is a schematic flowchart of a physical channel sending method according to this application. The embodiment may be performed by a terminal device. As shown in FIG. 1, the method may include the following steps.

Step 101. The terminal device generates a physical channel.

The terminal device generates the physical channel, where the physical channel may include N physical channel units, and N is a positive integer. The N physical channel units are respectively located in N time intervals of the M time intervals. In other words, the terminal device generates the physical channel, the physical channel is located in the N time intervals of the M time intervals, and N is a positive integer less than or equal to M.

Optionally, the terminal device generates the physical channel based on a value of N. To be specific, the terminal device generates, based on the value of N, a physical channel that occupies N time intervals. The value of N may be preset. Alternatively, the value of N may be configured by a network device, and the network device notifies the terminal device of configuration information. For example, before the terminal device generates the physical channel, the method further includes the following: The terminal device receives first configuration information, where the first configuration information indicates the value of N. The first configuration information is carried in higher layer signaling or physical layer signaling.

If the first configuration information indicates that the value of N is 1, the terminal device generates a physical channel that includes one physical channel unit, in other words, the terminal device generates a physical channel that occupies one time interval; if the first configuration information indicates that the value of N is 2, the terminal device generates a physical channel that includes two physical channel units; if the first configuration information indicates that the value of N is 3, the terminal device generates a physical channel that includes three physical channel units; and so on.

Optionally, the terminal device generates the physical channel based on a channel structure of the physical channel. The channel structure of the physical channel may be preconfigured. Alternatively, the channel structure of the physical channel may be configured by the network device, and the network device notifies the terminal device of configuration information. For example, before the terminal device generates the physical channel, the method further includes the following: The terminal device receives second configuration information, where the second configuration information indicates the channel structure of the physical channel, and the channel structure is a first structure, a second structure, or a third structure.

If the second configuration information indicates the first structure, the terminal device generates the physical channel based on the first structure; if the second configuration information indicates the second structure, the terminal device generates the physical channel based on the second structure; or if the second configuration information indicates the third structure, the terminal device generates the physical channel based on the third structure.

The channel structure of the physical channel varies with a quantity of time intervals included in a first time domain resource and composition of the time intervals.

For example, as shown in FIG. 2 or FIG. 3, the first subframe may include six time intervals, and in the six time intervals: a time interval 0 includes symbol 0 and symbol 1 in the first subframe; a time interval 1 includes symbol 2 and symbol 3 in the first subframe; a time interval 2 includes symbol 4, symbol 5, and symbol 6 in the first subframe; a time interval 3 includes symbol 7 and symbol 8 in the first subframe; a time interval 4 includes symbol 9 and symbol 10 in the first subframe; and a time interval 5 may include symbol 11, symbol 12, and symbol 13 in the first subframe, as shown in FIG. 2, or the time interval 5 may include symbol 11 and symbol 12 in the first subframe, as shown in FIG. 3. The last symbol in an uplink subframe, namely, symbol 13, can be used to transmit a sounding reference signal (sounding reference signal, SRS for short).

In this case, in the first structure, the physical channel includes one physical channel unit that is located in one of the six time intervals. In other words, in the first structure, the physical channel is located in one of the six time intervals.

In the second structure, the physical channel includes two physical channel units that are located in the time interval 0 and the time interval 1, or the physical channel includes one physical channel unit that is located in the time interval 2, or the physical channel includes two physical channel units that are located in the time interval 3 and the time interval 4, or the physical channel includes one physical channel unit that is located in the time interval 5. In other words, in the second structure, the physical channel is located in the time interval 0 and the time interval 1, or the physical channel is located in the time interval 2, or the physical channel is located in the time interval 3 and the time interval 4, or the physical channel is located in the time interval 5.

In the third structure, the physical channel includes three physical channel units that are located in the time interval 0, the time interval 1, and the time interval 2, or the physical channel includes three physical channel units that are located in the time interval 3, the time interval 4, and the time interval 5. In other words, in the third structure, the physical channel is located in the time interval 0, the time interval 1, and the time interval 2, or the physical channel is located in the time interval 3, the time interval 4, and the time interval 5.

It should be noted that, for embodiments described in subsequent FIG. 4 to FIG. 8, reference may also be made to the foregoing description. To be specific, "the physical channel includes N physical channel units that are located in N time intervals" is equivalent to "the physical channel is located in N time intervals". Details are not described subsequently again.

Optionally, one symbol in each of the six time intervals can be used to transmit a reference signal. For example, as shown in FIG. 2, the first symbol in each of the six time intervals can be used to transmit a reference signal of the time interval.

Optionally, only one symbol in the time interval 0 and the time interval 1 can be used to transmit a reference signal, only one symbol in the time interval 3 and the time interval 4 can be used to transmit a reference signal, and one symbol in each of the time interval 2 and the time interval 5 can be used to transmit a reference signal. In this way, a total of four symbols in one subframe can be used to transmit a reference signal, thereby reducing reference signal overheads.

For another example, as shown in FIG. 4, the first subframe may include eight time intervals, and in the eight time intervals: the time interval 0 includes symbol 0 and symbol 1 in the first subframe; the time interval 1 includes symbol 2 and symbol 3 in the first subframe; the time interval 2 includes symbol 3 and symbol 4 in the first subframe; the time interval 3 includes symbol 5 and symbol 6 in the first subframe; the time interval 4 includes symbol 7 and symbol 8 in the first subframe; the time interval 5 includes symbol 9 and symbol 10 in the first subframe; the time interval 6 includes symbol 10 and symbol 11 in the first subframe; and the time interval 7 includes symbol 12 and symbol 13 in the first subframe.

In this case, in the first structure, the physical channel includes one physical channel unit that is located in one of the eight time intervals.

Alternatively, in the first structure, the physical channel includes one physical channel unit that is located in the time interval 0, or the physical channel includes two physical channel units that are located in the time interval 1 and the time interval 2, or the physical channel includes one physical channel unit that is located in the time interval 3, or the physical channel includes one physical channel unit that is located in the time interval 4, or the physical channel includes two physical channel units that are located in the time interval 5 and the time interval 6, or the physical channel includes one physical channel unit that is located in the time interval 7.

In the second structure, the physical channel includes two physical channel units that are located in the time interval 0 and the time interval 1, or the physical channel includes two physical channel units that are located in the time interval 2 and the time interval 3, or the physical channel includes two physical channel units that are located in the time interval 4 and the time interval 5, or the physical channel includes two physical channel units that are located in the time interval 6 and the time interval 7.

In the third structure, the physical channel includes four physical channel units that are located in the time interval 0, the time interval 1, the time interval 2, and the time interval 3, or the physical channel includes four physical channel units that are located in the time interval 4, the time interval 5, the time interval 6, and the time interval 7.

Symbol 3 is used to transmit reference signals of the time interval 1 and the time interval 2, and symbol 10 is used to transmit reference signals of the time interval 5 and the time interval 6. Optionally, the first symbol in each of the time interval 0, the time interval 3, the time interval 4, and the time interval 7 can also be used to transmit a reference signal.

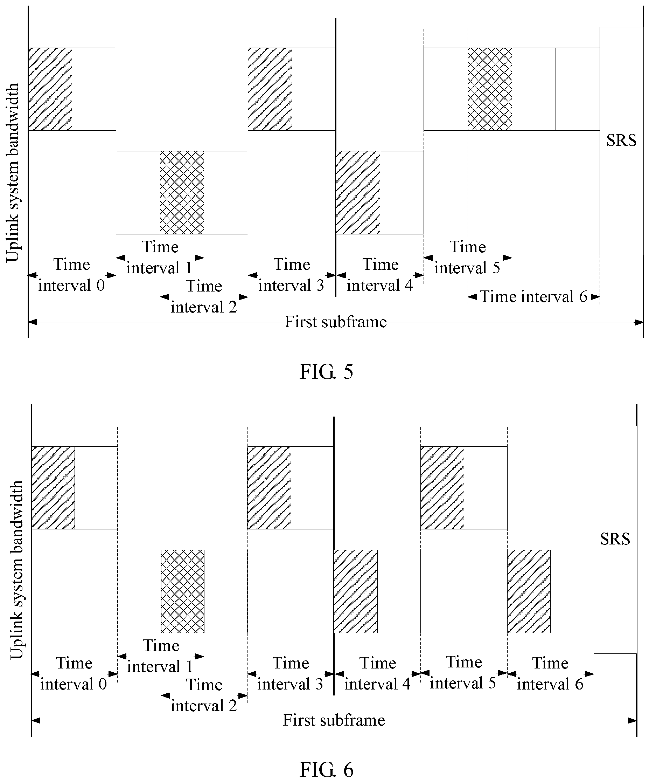

For another example, as shown in FIG. 5 or FIG. 6, the first subframe may include seven time intervals, and in the seven time intervals: the time interval 0 includes symbol 0 and symbol 1 in the first subframe; the time interval 1 includes symbol 2 and symbol 3 in the first subframe; the time interval 2 includes symbol 3 and symbol 4 in the first subframe; the time interval 3 includes symbol 5 and symbol 6 in the first subframe; the time interval 4 includes symbol 7 and symbol 8 in the first subframe; the time interval 5 includes symbol 9 and symbol 10 in the first subframe; and the time interval 6 may include symbol 10, symbol 11, and symbol 12 in the first subframe, as shown in FIG. 5, or the time interval 6 may include only symbol 11 and symbol 12 in the first subframe, as shown in FIG. 6. The time interval division schemes shown in FIG. 5 and FIG. 6 are applicable to a scenario in which the last symbol in the first subframe is used to transmit an SRS.

In this case, in the first structure, the physical channel includes one physical channel unit that is located in one of the seven time intervals.

Alternatively, in the first structure, the physical channel includes one physical channel unit that is located in the time interval 0, or the physical channel includes two physical channel units that are located in the time interval 1 and the time interval 2, or the physical channel includes one physical channel unit that is located in the time interval 3, or the physical channel includes one physical channel unit that is located in the time interval 4, or the physical channel includes one physical channel unit that is located in the time interval 5, or the physical channel includes one physical channel unit that is located in the time interval 6.

In the second structure, the physical channel includes two physical channel units that are located in the time interval 0 and the time interval 1, or the physical channel includes two physical channel units that are located in the time interval 2 and the time interval 3, or the physical channel includes two physical channel units that are located in the time interval 4 and the time interval 5, or the physical channel includes one physical channel unit that is located in the time interval 6.

In the third structure, the physical channel includes four physical channel units that are located in the time interval 0, the time interval 1, the time interval 2, and the time interval 3, or the physical channel includes three physical channel units that are located in the time interval 4, the time interval 5, and the time interval 6.

As shown in FIG. 5 or FIG. 6, symbol 3 is used to transmit reference signals of the time interval 1 and the time interval 2, and as shown in FIG. 5, symbol 10 is used to transmit reference signals of the time interval 5 and the time interval 6. Optionally, as shown in FIG. 5, the first symbol in each of the time interval 0, the time interval 3, and the time interval 4 is used to transmit a reference signal. Optionally, as shown in FIG. 6, the first symbol in each of the time interval 0, the time interval 3, the time interval 4, the time interval 5, and the time interval 6 is used to transmit a reference signal.

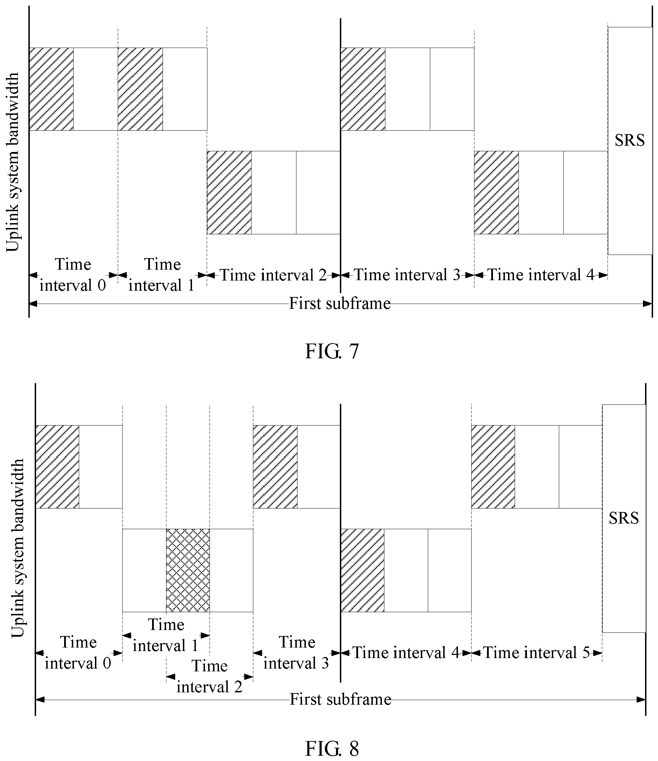

In addition, as shown in FIG. 7, the first subframe may include five time intervals, and in the five time intervals: the time interval 0 includes symbol 0 and symbol 1 in the first subframe; the time interval 1 includes symbol 2 and symbol 3 in the first subframe; the time interval 2 includes symbol 4, symbol 5, and symbol 6 in the first subframe; the time interval 3 includes symbol 7, symbol 8, and symbol 9 in the first subframe; and the time interval 4 includes symbol 10, symbol 11, and symbol 12 in the first subframe. The time interval division schemes shown in FIG. 7 are applicable to a scenario in which the last symbol in the first subframe is used to transmit an SRS.

In this case, in the first structure, the physical channel includes one physical channel unit that is located in one of the five time intervals.

In the second structure, the physical channel includes two physical channel units that are located in the time interval 0 and the time interval 1, or the physical channel includes one physical channel unit that is located in the time interval 2, or the physical channel includes one physical channel unit that is located in the time interval 3, or the physical channel includes one physical channel unit that is located in the time interval 4.

In the third structure, the physical channel includes three physical channel units that are located in the time interval 0, the time interval 1, and the time interval 2, or the physical channel includes two physical channel units that are located in the time interval 3 and the time interval 4.

Optionally, one symbol in each of the five time intervals can be used to transmit a reference signal. For example, as shown in FIG. 7, the first symbol in each of the five time intervals is used to transmit a reference signal.

In addition, as shown in FIG. 8, the first subframe may include six time intervals, and in the six time intervals: the time interval 0 includes symbol 0 and symbol 1 in the first sub frame; the time interval 1 includes symbol 2 and symbol 3 in the first sub frame; the time interval 2 includes symbol 3 and symbol 4 in the first subframe; the time interval 3 includes symbol 5 and symbol 6 in the first subframe; the time interval 4 includes symbol 7, symbol 8, and symbol 9 in the first subframe; and the time interval 5 includes symbol 10, symbol 11, and symbol 12 in the first subframe.

In this case, in the first structure, the physical channel includes one physical channel unit that is located in one of the six time intervals.

In the second structure, the physical channel includes two physical channel units that are located in the time interval 0 and the time interval 1, or the physical channel includes two physical channel units that are located in the time interval 2 and the time interval 3, or the physical channel includes one physical channel unit that is located in the time interval 4, or the physical channel includes one physical channel unit that is located in the time interval 5.

In the third structure, the physical channel includes four physical channel units that are located in the time interval 0, the time interval 1, the time interval 2, and the time interval 3, or the physical channel includes two physical channel units that are located in the time interval 4 and the time interval 5.

Symbol 3 is used to transmit reference signals of the time interval 1 and the time interval 2. Optionally, the first symbol in each of the other time intervals is used to transmit a reference signal.

The foregoing examples are merely example descriptions of time intervals included in the first subframe and the channel structures, and do not constitute a limitation on this application.

Optionally, N is greater than 1. To be specific, the physical channel includes two or more physical channel units, and at least two of the N physical channel units are located in different frequency domain resources. In this way, a frequency diversity gain can be obtained, and physical channel receiving performance can be improved.

Optionally, N is greater than 1, and all the N physical channel units carry same information. In other words, the N physical channel units carry N pieces of same information. The information is uplink control information and/or data information. The N pieces of same information may be independently decoded. In this way, when the network device receives the physical channel, if information in a physical channel unit is correctly demodulated, the network device may obtain the information in advance; otherwise, the network device may use a plurality of physical channel units together to demodulate the information, to improve demodulation performance.

Optionally, N is greater than 1, and the N physical channel units are respectively used to carry N pieces of different coded information. The coded information is coded information of uplink control information and/or coded information of data information. Specifically, after original information (for example, the uplink control information and/or the data information) of X bits is coded, coded information of Y bits is obtained, where X and Y are both positive integers. The coded information of Y bits is divided into N pieces, and the N pieces of coded information are respectively carried by the N physical channel units. Optionally, bit quantities of the N pieces of coded information are the same. Optionally, bit quantities of at least two pieces of coded information in the N pieces of coded information are different. In this method, more information bits can be transmitted.

Step 102. The terminal device transmits the physical channel in a first time domain resource.

After the physical channel is generated, the terminal device transmits the physical channel in the first time domain resource. Specifically, the terminal device sends the physical channel in the N time intervals in the first time domain resource.

Usually, TTI lengths of a physical downlink shared channel (physical downlink shared channel, PDSCH for short) and a physical channel that carries HARQ-ACK feedback information of the PDSCH are the same, and are both 1 ms. However, TTI lengths, introduced in the present invention, of a PDSCH and a physical channel may be different and are both less than 1 ms. Therefore, HARQ-ACK timing in the prior art is unsuitable, and new HARQ-ACK timing needs to be defined. HARQ-ACK timing is a timing relationship between the PDSCH and the HARQ-ACK feedback information.

The physical channel is a PUCCH or a PUSCH. Before step 101, that is, before the terminal device generates the physical channel, the method further includes the following: The terminal device receives a PDSCH in a second time domain resource. The second time domain resource includes Q time intervals, the PDSCH is located in one of the Q time intervals, and Q is 7, 6, or 5. Step 102 includes the following: The terminal device sends the physical channel in the N time intervals of the M time intervals in the first time domain resource, where the physical channel is used to carry HARQ-ACK feedback information of the PDSCH, namely, receiving status information of the PDSCH.

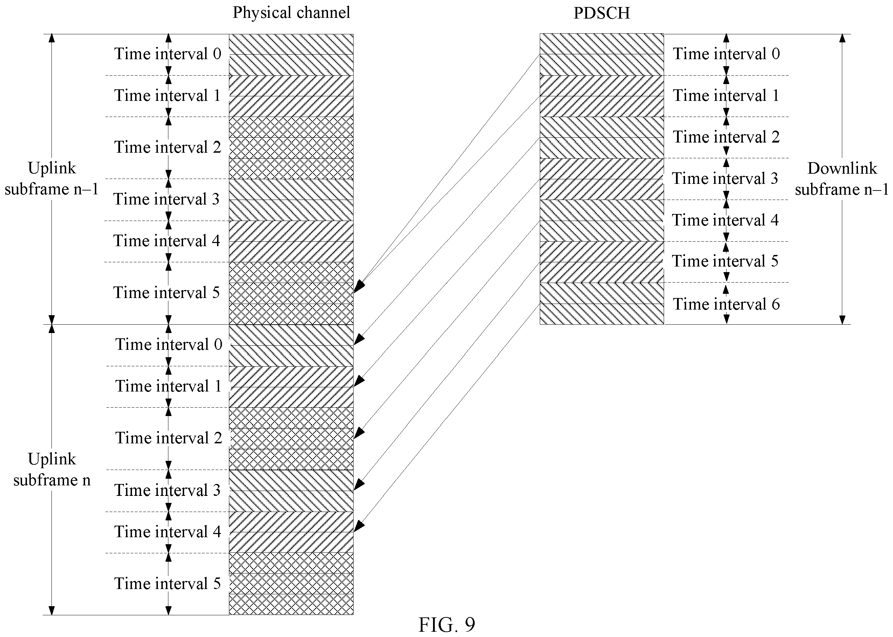

For example, as shown in FIG. 9, the second time domain resource is a second subframe, Q is equal to 7, and in six time intervals of the second subframe: a time interval 0 includes symbol 0 and symbol 1 in the second subframe; a time interval 1 includes symbol 2 and symbol 3 in the second subframe; a time interval 2 includes symbol 4 and symbol 5 in the second subframe; a time interval 3 includes symbol 6 and symbol 7 in the second subframe; a time interval 4 includes symbol 8 and symbol 9 in the second sub frame; a time interval 5 includes symbol 10 and symbol 11 in the second sub frame; and a time interval 6 includes symbol 12 and symbol 13 in the second subframe.

The PDSCH is located in the time interval 0 and/or the time interval 1 of the second subframe, the physical channel is located in the time interval 5 of the first subframe, the first subframe is uplink subframe n-1, and the second subframe is downlink subframe n-1; or
the PDSCH is located in the time interval 2 of the second subframe, the physical channel is located in the time interval 0 of the first subframe, the first subframe is uplink subframe n, and the second subframe is downlink subframe n-1; or
the PDSCH is located in the time interval 3 of the second subframe, the physical channel is located in the time interval 1 of the first subframe, the first subframe is uplink subframe n, and the second subframe is downlink subframe n-1; or
the PDSCH is located in the time interval 4 of the second subframe, the physical channel is located in the time interval 2 of the first subframe, the first subframe is uplink subframe n, and the second subframe is downlink subframe n-1; or
the PDSCH is located in the time interval 5 of the second subframe, the physical channel is located in the time interval 3 of the first subframe, the first subframe is uplink subframe n, and the second subframe is downlink subframe n-1; or
the PDSCH is located in the time interval 6 of the second subframe, the physical channel is located in the time interval 4 of the first subframe, the first subframe is uplink subframe n, and the second subframe is downlink subframe n-1.

Because one or two PDCCH (Physical Downlink Control Channel, physical downlink control channel) symbols exist in the time interval 0 of the second subframe, there can be only one symbol or even no symbol in the time interval 0 to transmit the PDSCH. Therefore, HARQ-ACK information of the PDSCH in the time intervals 0 and 1 may be fed back together in one time interval of the first subframe, to avoid an uplink resource waste.

For example, the second time domain resource is a second subframe, Q is equal to 6, and in six time intervals of the second subframe: a time interval 0 includes symbol 0, symbol 1, and symbol 2 in the second subframe; a time interval 1 includes symbol 3 and symbol 4 in the second subframe; a time interval 2 includes symbol 5 and symbol 6 in the second subframe; a time interval 3 includes symbol 7, symbol 8, and symbol 9 in the second subframe; a time interval 4 includes symbol 10 and symbol 11 in the second subframe; and a time interval 5 includes symbol 12 and symbol 13 in the second subframe.

Alternatively, in six time intervals of the second subframe: a time interval 0 includes symbol 0, symbol 1, symbol 2, and symbol 3 in the second subframe, or a time interval 0 includes symbol 1, symbol 2, and symbol 3 in the second subframe, or a time interval 0 includes symbol 2 and symbol 3 in the second subframe; a time interval 1 includes symbol 4 and symbol 5 in the second subframe; a time interval 2 includes symbol 6 and symbol 7 in the second subframe; a time interval 3 includes symbol 8 and symbol 9 in the second subframe; a time interval 4 includes symbol 10 and symbol 11 in the second subframe; and a time interval 5 includes symbol 12 and symbol 13 in the second subframe.

The PDSCH is located in the time interval 0 of the second subframe, the physical channel is located in the time interval 5 of the first subframe, the first subframe is uplink subframe n-1, and the second subframe is downlink subframe n-1; or
the PDSCH is located in the time interval 0 of the second subframe, the physical channel is located in the time interval 0 of the first subframe, the first subframe is uplink subframe n, and the second subframe is downlink subframe n-1; or
the PDSCH is located in the time interval 1 of the second subframe, the physical channel is located in the time interval 0 or 1 of the first subframe, the first subframe is uplink subframe n, and the second subframe is downlink subframe n-1; or
the PDSCH is located in the time interval 2 of the second subframe, the physical channel is located in the time interval 1 or 2 of the first subframe, the first subframe is uplink subframe n, and the second subframe is downlink subframe n-1; or
the PDSCH is located in the time interval 3 of the second subframe, the physical channel is located in the time interval 2 or 3 of the first subframe, the first subframe is uplink subframe n, and the second subframe is downlink subframe n-1; or
the PDSCH is located in the time interval 4 of the second subframe, the physical channel is located in the time interval 3 or 4 of the first subframe, the first subframe is uplink subframe n, and the second subframe is downlink subframe n-1; or
the PDSCH is located in the time interval 5 of the second subframe, the physical channel is located in the time interval 4 or 5 of the first subframe, the first subframe is uplink subframe n, and the second subframe is downlink subframe n-1.

Because a time interval including three symbols and a time interval including two symbols exist in the second subframe, and processing capabilities of the terminal device are different when the PDSCH is located in time intervals of different lengths, HARQ-ACK feedback may be postponed.

For example, the second time domain resource is a second subframe, Q is equal to 5, and in five time intervals of the second subframe: a time interval 0 includes symbol 3, symbol 4, and symbol 5 in the second subframe; a time interval 1 includes symbol 6 and symbol 7 in the second subframe; a time interval 2 includes symbol 8 and symbol 9 in the second subframe; a time interval 3 includes symbol 10 and symbol 11 in the second subframe; and a time interval 4 includes symbol 12 and symbol 13 in the second subframe.

The PDSCH is located in the time interval 0 of the second subframe, the physical channel is located in the time interval 0 or 1 of the first subframe, the first subframe is uplink subframe n, and the second subframe is downlink subframe n-1; or
the PDSCH is located in the time interval 1 of the second subframe, the physical channel is located in the time interval 1 or 2 of the first subframe, the first subframe is uplink subframe n, and the second subframe is downlink subframe n-1; or
the PDSCH is located in the time interval 2 of the second subframe, the physical channel is located in the time interval 2 or 3 of the first subframe, the first subframe is uplink subframe n, and the second subframe is downlink subframe n-1; or
the PDSCH is located in the time interval 3 of the second subframe, the physical channel is located in the time interval 3 or 4 of the first subframe, the first subframe is uplink subframe n, and the second subframe is downlink subframe n-1; or
the PDSCH is located in the time interval 4 of the second subframe, the physical channel is located in the time interval 4 or 5 of the first subframe, the first subframe is uplink subframe n, and the second subframe is downlink subframe n-1.

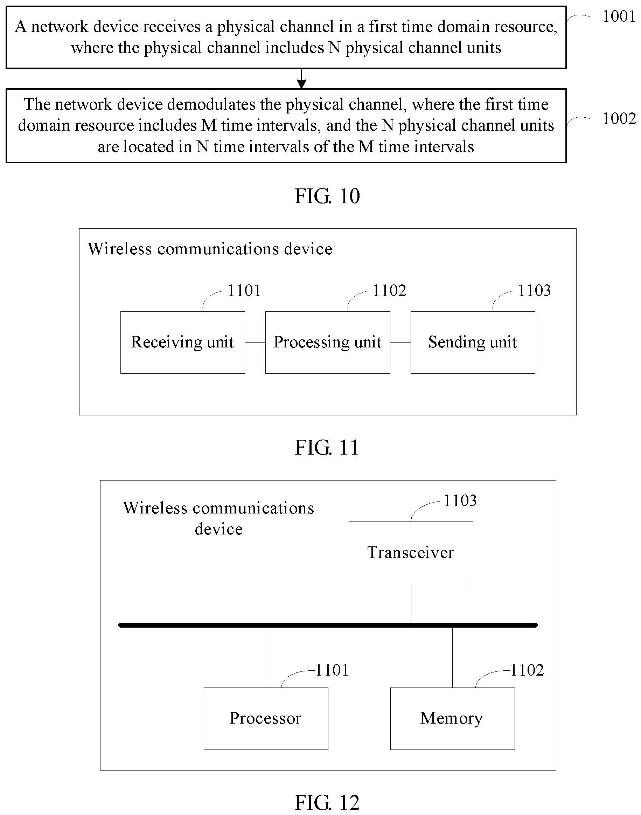

FIG. 10 is a schematic flowchart of an embodiment of a physical channel receiving method according to this application. Unless otherwise stated, for content of this embodiment that is the same as that of the foregoing embodiment, refer to the description in the foregoing embodiment. Details are not described subsequently again. As shown in FIG. 10, the method may include the following steps.

Step 1001. A network device receives a physical channel in a first time domain resource.

The network device receives the physical channel in the N time intervals in the first time domain resource.

The physical channel is a PUCCH or a PUSCH. Before the network device receives the physical channel in the first time domain resource, the method further includes the following: The network device sends a PDSCH in a second time domain resource. The second time domain resource includes Q time intervals, the PDSCH is located in one of the Q time intervals, and Q is 7, 6, or 5. Step 1001 includes the following: The network device receives the physical channel in N time intervals of M time intervals in the first time domain resource, where the physical channel is used to carry HARQ-ACK feedback information of the PDSCH, namely, receiving status information of the PDSCH. For timing between the PDSCH and the physical channel, refer to the description in the foregoing embodiment. Details are not described herein again.

For convenience of descriptions, a first physical channel mentioned subsequently is the physical channel. In other words, the physical channel may also be referred to as the first physical channel.

Optionally, the network device receives a first physical channel and a second physical channel in the first time domain resource. The second physical channel includes P physical channel units, and the P physical channel units are located in P time intervals of the M time intervals. In other words, the second physical channel is located in the P time intervals. P is greater than or equal to N, P is less than or equal to M, and the P time intervals include the N time intervals. The first physical channel and the second physical channel are sent by a same terminal device or different terminal devices. Time-frequency domain resources that are occupied by the first physical channel and the second physical channel partially overlap, and the first physical channel and the second physical channel use different cyclic shifts (cyclic shift). In this way, physical channels of different time lengths can be multiplexed in an overlapped time-frequency domain resource.

Optionally, the network device receives a first physical channel in the first time domain resource, and further receives at least one of a second physical channel, a third physical channel, and a fourth physical channel. The first physical channel is located in a time interval i and a frequency domain resource A, the second physical channel is located in a time interval j and the frequency domain resource A, the third physical channel is located in a time interval k and a frequency domain resource B, where i, j, and k are different from each other and are integers from 0 to M-1, and the frequency domain resource A and the frequency domain resource B are different. The fourth physical channel occupies the time interval i, the time interval j, and the time interval k, and the fourth physical channel is located in the frequency domain resource B in the time intervals i and j and is located in the frequency domain resource A in the time interval k. Alternatively, the fourth physical channel occupies the time interval i and the time interval k, and the fourth physical channel is located in the frequency domain resource B in the time interval i and is located in the frequency domain resource A in the time interval k. The first physical channel, the second physical channel, the third physical channel, and the fourth physical channel are sent by a same terminal device or at least two different terminal devices. It can be learned that, in the method in the present invention, physical channels of different lengths can be multiplexed, and radio resources can be effectively multiplexed. In other words, a radio resource waste is reduced.

Step 1002. The network device demodulates the physical channel.

The network device demodulates the physical channel, where the physical channel may include N physical channel units, and N is a positive integer. The N physical channel units are located in the N time intervals of the M time intervals. In other words, the network device demodulates the physical channel, the physical channel is located in the N time intervals of the M time intervals, and N is a positive integer less than or equal to M.

Demodulation is a process of restoring information from a modulated signal that carries information. For step 1002, demodulation is a process in which the network device restores information from the received physical channel. If the physical channel is a PUSCH, restored information is information carried by the PUSCH, for example, data information, HARQ-ACK information, and/or channel state information (CSI, Channel State Information) that are/is included in an uplink shared channel (UL-SCH, Uplink Shared Channel). If the physical channel is a PUCCH, restored information is information carried by the PUCCH, for example, HARQ-ACK information and/or channel state information (CSI, Channel State Information).

Optionally, the network device demodulates the physical channel based on a value of N. To be specific, the network device demodulates the physical channel based on a structure of the physical channel that occupies N time intervals. The value of N may be preset. Alternatively, the value of N may be configured by the network device, and the network device notifies the terminal device of configuration information. For example, before the network device receives the physical channel in the first time domain resource, the method further includes the following: The network device sends first configuration information, where the first configuration information indicates the value of N.

Optionally, the network device demodulates the physical channel based on a channel structure of the physical channel. The channel structure of the physical channel may be preconfigured. Alternatively, the channel structure of the physical channel may be configured by the network device, and the network device notifies the terminal device of configuration information. For example, before the network device receives the physical channel in the first time domain resource, the method further includes the following: The network device sends second configuration information, where the second configuration information indicates the channel structure of the physical channel and the channel structure is a first structure, a second structure, or a third structure.

For the first time domain resource, and the channel structure of the physical channel such as the first structure, the second structure, or the third structure, refer to the description in the foregoing embodiment. Details are not described herein again.

Optionally, N is greater than 1, and at least two physical channels of the N physical channel units are located in different frequency domain resources. For details, refer to the description in the foregoing embodiment. Details are not described herein again.

Optionally, N is greater than 1, and all the N physical channel units carry same information. When the network device receives the physical channel, if information in a physical channel unit is correctly demodulated, the network device may obtain the information in advance; otherwise, the network device may use a plurality of physical channel units together to demodulate the information, to improve demodulation performance.

Optionally, N is greater than 1, and the N physical channel units are respectively used to carry N pieces of different coded information. The network device performs demodulation (including decoding) by using the N pieces of different coded information together, to obtain original information.

FIG. 11 is a schematic structural diagram of an embodiment of a wireless communications device according to this application. The wireless communications device may be the terminal device or the network device in the foregoing embodiments. Unless otherwise stated, for content of this embodiment that is the same as that of the foregoing embodiment, refer to the description in the foregoing embodiment. Details are not described subsequently again.

As shown in FIG. 11, the wireless communications device may include a receiving unit 1101, a processing unit 1102, and a sending unit 1103.

The wireless communications device is a terminal device. The processing unit 1102 is configured to generate a physical channel, where the physical channel includes N physical channel units, and N is a positive integer. The sending unit 1103 is configured to send the physical channel in a first time domain resource, where the first time domain resource includes M time intervals, the N physical channel units are located in N time intervals of the M time intervals, and M is a positive integer greater than or equal to N.

Optionally, the receiving unit 1101 is configured to receive first configuration information, where the first configuration information indicates a value of N. Optionally, the processing unit 1102 is configured to generate the physical channel based on the value of N.

Optionally, the receiving unit 1101 is configured to receive second configuration information, where the second configuration information indicates a channel structure of the physical channel, and the channel structure is a first structure, a second structure, or a third structure. Optionally, the processing unit 1102 is configured to generate the physical channel based on the channel structure of the physical channel, that is, generate a physical channel whose channel structure is the first structure, the second structure, or the third structure.

For the first time domain resource, and the channel structure of the physical channel such as the first structure, the second structure, or the third structure, refer to the description in the foregoing embodiment. Details are not described herein again.

Optionally, the receiving unit 1101 is further configured to receive a PDSCH in a second time domain resource. The second time domain resource includes Q time intervals, the PDSCH is located in one of the Q time intervals, and Q is 7, 6, or 5. The sending unit 1103 is configured to send the physical channel in the N time intervals of the M time intervals in the first time domain resource, where the physical channel is used to carry HARQ-ACK feedback information of the PDSCH. For timing between the PDSCH and the physical channel, refer to the description in the foregoing embodiment. Details are not described herein again.

The wireless communications device is a network device. The receiving unit 1101 is configured to receive a physical channel in a first time domain resource, where the physical channel includes N physical channel units, and N is a positive integer. The processing unit 1102 is configured to demodulate the physical channel, where the first time domain resource includes M time intervals, the N physical channel units are located in N time intervals of the M time intervals, and M is a positive integer greater than or equal to N.

Optionally, the sending unit 1103 is configured to send first configuration information, where the first configuration information indicates a value of N. The processing unit 1102 is configured to demodulate the physical channel based on the value of N.

Optionally, the sending unit 1103 is configured to send second configuration information, where the second configuration information indicates a channel structure of the physical channel, and the channel structure is a first structure, a second structure, or a third structure. Optionally, the processing unit 1102 is configured to demodulate the physical channel based on the channel structure of the physical channel.

Optionally, the sending unit 1103 is further configured to send a PDSCH in a second time domain resource. The receiving unit 1101 is configured to send the physical channel in the N time intervals of the M time intervals in the first time domain resource, where the physical channel is used to carry HARQ-ACK feedback information of the PDSCH. For timing between the PDSCH and the physical channel, refer to the description in the foregoing embodiment. Details are not described herein again.

Optionally, the receiving unit 1101 is configured to receive a first physical channel and a second physical channel in the first time domain resource. For the second physical channel and a manner of multiplexing the second physical channel and the first physical channel, refer to the description in the foregoing embodiment. Details are not described herein again.

Optionally, the receiving unit 1101 is configured to receive a first physical channel in the first time domain resource, and further receives at least one of a second physical channel, a third physical channel, and a fourth physical channel. For these four physical channels and a manner of multiplexing the four physical channels, refer to the description in the foregoing embodiment. Details are not described herein again.

The wireless communications device may further include a storage unit and the like. The storage unit may store a predetermined sequence, and may further store a predetermined rule and the like. The receiving unit 1101 and the sending unit 1103 may also be collectively referred to as a transceiver unit that is located in a unit entity. It should be noted that, in this embodiment of the present invention, the receiving unit 1101 may also be referred to as a receiving module 1101, the processing unit 1102 may also be referred to as a processing module 1102, the sending unit 1103 may also be referred to as a sending module 1103, and the storage unit may also be referred to as a storage module.

FIG. 12 is a schematic structural diagram of another embodiment of a wireless communications device according to this application.

As shown in FIG. 12, the wireless communications device may include a processor 1201, a memory 1202, a transceiver 1203, and the like. The processor, the memory, and the transceiver may be connected to each other by using one or more buses.

The processor 1201 is a control center of the wireless communications device, is connected to parts of the entire wireless communications device by using various interfaces and lines, and performs various functions of the wireless communications device and/or data processing by running or executing a software program and/or a module that are/is stored in the memory 1202 and by invoking data stored in the memory. The processor may include an integrated circuit (integrated circuit, IC for short), for example, may include a single packaged IC or may include a plurality of connected packaged ICs with a same function or different functions. For example, the processor may include only a central processing unit (central processing unit, CPU for short), or may be a combination of a GPU, a digital signal processor (digital signal processor, DSP for short), and a control chip (for example, a baseband chip) in a transceiver. In an implementation of the present invention, the CPU may be a single computing core, or may include a plurality of computing cores.

The transceiver 1203 is configured to establish a communication channel, so that the wireless communications device is connected to a receiving device by using the communication channel, to implement data transmission between wireless communications devices. The transceiver may include a communications module such as a wireless local area network (wireless local area network, WLAN for short) module, a Bluetooth module, or a baseband (baseband) module, and a radio frequency (radio frequency, RF for short) circuit corresponding to the communication module, to perform wireless local area network communication, Bluetooth communication, infrared communication, and/or cellular communications system communication, for example, Wideband Code Division Multiple Access (wideband code division multiple access, WCDMA for short) and/or High Speed Downlink Packet Access (high speed downlink packet access, HSDPA for short). The transceiver is configured to control communication of each component in the wireless communications device, and can support direct memory access (direct memory access).

In different implementations of the present invention, various transceivers in the transceiver 1203 generally appear in a form of an integrated circuit chip (integrated circuit chip), may be selectively combined, and do not necessarily include all transceivers and corresponding antenna groups. For example, the transceiver 1203 may include only a baseband chip, a radio frequency chip, and a corresponding antenna, to provide a communication function in a cellular communications system. The wireless communications device may be connected to a cellular network (cellular network) or the Internet (internet) by using a wireless communication connection established by the transceiver, for example, wireless local area network access or WCDMA access. In some optional implementations of the present invention, a communication module such as the baseband module in the transceiver may be integrated into the processor, typically, such as the APQ+MDM series platform provided by Qualcomm (qualcomm). A radio frequency circuit is configured to receive and send information or receive and send a signal during a call process. For example, after receiving downlink information of a network device, the radio frequency circuit provides the downlink information to the processor for processing, and sends designed uplink data to the network device. Usually, the radio frequency circuit includes a well-known circuit that is configured to execute these functions, including but not limited to an antenna system, a radio frequency transceiver, one or more amplifiers, a tuner, one or more oscillators, a digital signal processor, a codec (codec) chipset, a subscriber identity module (SIM) card, a memory, and the like. In addition, the radio frequency circuit may further communicate with a network and another device through wireless communication. The wireless communication may use any communications standard or protocol, including but not limited to Global System for Mobile Communications (global system of mobile communication, GSM for short), a general packet radio service (general packet radio service, GPRS for short), Code Division Multiple Access (code division multiple access, CDMA for short), Wideband Code Division Multiple Access (wideband code division multiple access, WCDMA for short), High Speed Uplink Packet Access (high speed uplink packet access, HSUPA for short), Long Term Evolution (long term evolution, LTE for short), an email service, a short message service (short messaging service, SMS for short), and the like.

A function to be implemented by the receiving unit 1101 shown in the embodiment shown in FIG. 11 may be implemented by the transceiver 1203 of the wireless communications device, or implemented by the transceiver 1203 that is controlled by the processor 1201. A function to be implemented by the sending unit 1103 shown in the embodiment shown in FIG. 11 may also be implemented by the transceiver 1203 of the wireless communications device, or implemented by the transceiver 1203 that is controlled by the processor 1201. A function to be implemented by the processing unit 1102 shown in the embodiment shown in FIG. 11 may be implemented by the processor 1201.

In specific implementation, the present invention further provides a computer storage medium. The computer storage medium may store a program, and when the program is executed, some or all of the steps in each embodiment of a calling method provided in the present invention may be included. The foregoing storage medium may be a magnetic disk, an optical disc, a read-only memory (read-only memory, ROM for short), a random access memory (random access memory, RAM for short), or the like.

A person skilled in the art may clearly understand that, the technologies in the embodiments of the present invention may be implemented by software in addition to a necessary general hardware platform. Based on such an understanding, the technical solutions in the embodiments of the present invention essentially or the part contributing to the prior art may be embodied in a form of a software product. The computer software product may be stored in a storage medium, such as a ROM/RAM, a magnetic disk, or an optical disc, and includes instructions causing a computer device (which may be a personal computer, a server, a network device, or the like) to perform the methods described in the embodiments or some parts of the embodiments of the present invention.

For same or similar parts in the embodiments in this specification, refer to these embodiments. Especially, the wireless communications device embodiment is basically similar to the method embodiments, and therefore is described briefly. For related parts, refer to the descriptions in the method embodiments.

The foregoing implementations of the present invention do not constitute a limitation on the protection scope of the present invention.

## Claims

1. A physical channel sending method, comprising:
generating, by a terminal device, a physical channel, wherein the physical channel includes N physical channel units, and N is a positive integer; and
sending, by the terminal device, the physical channel in a first time domain resource, wherein
the first time domain resource comprises M time intervals, the N physical channel units are located in N time intervals of the M time intervals, and M is a positive integer greater than or equal to N.

2. The method according to claim 1, before the generating, by a terminal device, a physical channel, further comprising:
receiving, by the terminal device, first configuration information, wherein the first configuration information indicates a value of N.

3. The method according to claim 1 or 2, wherein the first time domain resource is a first sub frame, the first sub frame comprises six time intervals, and in the six time intervals:
a time interval 0 includes symbol 0 and symbol 1 in the first sub frame;
a time interval 1 includes symbol 2 and symbol 3 in the first sub frame;
a time interval 2 includes symbol 4, symbol 5, and symbol 6 in the first subframe;
a time interval 3 includes symbol 7 and symbol 8 in the first subframe;
a time interval 4 includes symbol 9 and symbol 10 in the first subframe; and
a time interval 5 includes symbol 11, symbol 12, and symbol 13 in the first subframe, or the time interval 5 includes symbol 11 and symbol 12 in the first subframe.

4. The method according to claim 4, wherein the generating, by a terminal device, a physical channel comprises:
generating, by the terminal device, a physical channel whose channel structure is a first structure, a second structure, or a third structure, wherein
in the first structure, the physical channel includes one physical channel unit that is located in one of the six time intervals;
in the second structure, the physical channel includes two physical channel units that are located in the time interval 0 and the time interval 1, or the physical channel includes one physical channel unit that is located in the time interval 2, or the physical channel includes two physical channel units that are located in the time interval 3 and the time interval 4, or the physical channel includes one physical channel unit that is located in the time interval 5; and
in the third structure, the physical channel includes three physical channel units that are located in the time interval 0, the time interval 1, and the time interval 2, or the physical channel includes three physical channel units that are located in the time interval 3, the time interval 4, and the time interval 5.

5. The method according to claim 1, wherein the first time domain resource is a first subframe,
the first subframe comprises eight time intervals, and in the eight time intervals:
the time interval 0 includes symbol 0 and symbol 1 in the first subframe;
the time interval 1 includes symbol 2 and symbol 3 in the first subframe;
the time interval 2 includes symbol 3 and symbol 4 in the first subframe;
the time interval 3 includes symbol 5 and symbol 6 in the first subframe;
the time interval 4 includes symbol 7 and symbol 8 in the first subframe;
the time interval 5 includes symbol 9 and symbol 10 in the first subframe;
the time interval 6 includes symbol 10 and symbol 11 in the first subframe; and
the time interval 7 includes symbol 12 and symbol 13 in the first subframe, wherein
symbol 3 is used to transmit reference signals of the time interval 1 and the time interval 2, and symbol 10 is used to transmit reference signals of the time interval 5 and the time interval 6.

6. The method according to claim 5, wherein the generating, by a terminal device, a physical channel comprises:
generating, by the terminal device, a physical channel whose channel structure is a first structure, a second structure, or a third structure, wherein
in the first structure, the physical channel includes one physical channel unit that is located in one of the eight time intervals;
in the second structure, the physical channel includes two physical channel units that are located in the time interval 0 and the time interval 1, or the physical channel includes two physical channel units that are located in the time interval 2 and the time interval 3, or the physical channel includes two physical channel units that are located in the time interval 4 and the time interval 5, or the physical channel includes two physical channel units that are located in the time interval 6 and the time interval 7; and
in the third structure, the physical channel includes four physical channel units that are located in the time interval 0, the time interval 1, the time interval 2, and the time interval 3, or the physical channel includes four physical channel units that are located in the time interval 4, the time interval 5, the time interval 6, and the time interval 7.

7. The method according to claim 1, wherein the first time domain resource is a first subframe,
the first subframe comprises seven time intervals, and in the seven time intervals:
the time interval 0 includes symbol 0 and symbol 1 in the first subframe;
the time interval 1 includes symbol 2 and symbol 3 in the first subframe;
the time interval 2 includes symbol 3 and symbol 4 in the first subframe;
the time interval 3 includes symbol 5 and symbol 6 in the first subframe;
the time interval 4 includes symbol 7 and symbol 8 in the first subframe;
the time interval 5 includes symbol 9 and symbol 10 in the first subframe; and
the time interval 6 includes symbol 10, symbol 11, and symbol 12 in the first subframe, wherein
symbol 3 is used to transmit reference signals of the time interval 1 and the time interval 2, and symbol 10 is used to transmit reference signals of the time interval 5 and the time interval 6.

8. The method according to claim 7, wherein the generating, by a terminal device, a physical channel comprises:
generating, by the terminal device, a physical channel whose channel structure is a first structure, a second structure, or a third structure, wherein
in the first structure, the physical channel includes one physical channel unit that is located in one of the seven time intervals;
in the second structure, the physical channel includes two physical channel units that are located in the time interval 0 and the time interval 1, or the physical channel includes two physical channel units that are located in the time interval 2 and the time interval 3, or the physical channel includes two physical channel units that are located in the time interval 4 and the time interval 5, or the physical channel includes one physical channel unit that is located in the time interval 6; and
in the third structure, the physical channel includes four physical channel units that are located in the time interval 0, the time interval 1, the time interval 2, and the time interval 3, or the physical channel includes three physical channel units that are located in the time interval 4, the time interval 5, and the time interval 6.

9. The method according to claim 4, 6, or 8,
before the generating, by a terminal device, a physical channel, further comprising:
receiving, by the terminal device, second configuration information, wherein the second configuration information indicates a channel structure of the physical channel, and the channel structure is the first structure, the second structure, or the third structure, wherein
the generating, by a terminal device, a physical channel comprises:
generating, by the terminal device, the physical channel based on the channel structure that is indicated by the second configuration information.

10. The method according to any one of claims 1 to 9, wherein
N is greater than 1, and uplink control information carried by all the N physical channel units is the same; or
the N physical channel units respectively carry N pieces of coded information of uplink control information.

11. A physical channel receiving method, comprising:
receiving, by a network device, a physical channel in a first time domain resource, wherein the physical channel includes N physical channel units, and N is a positive integer; and
demodulating, by the network device, the physical channel, wherein
the first time domain resource comprises M time intervals, the N physical channel units are located in N time intervals of the M time intervals, and M is a positive integer greater than or equal to N.

12. The method according to claim 11, before the receiving, by a network device, a physical channel in a first time domain resource, further comprising:
sending, by the network device, first configuration information, wherein the first configuration information indicates a value of N.

13. The method according to claim 11, before the receiving, by a network device, a physical channel in a first time domain resource, further comprising:
sending, by the network device, second configuration information, wherein the second configuration information indicates a channel structure of the physical channel, and the channel structure is a first structure, a second structure, or a third structure.

14. A terminal device, comprising:
a processing unit, configured to generate a physical channel, wherein the physical channel includes N physical channel units, and N is a positive integer; and
a sending unit, configured to send the physical channel in a first time domain resource, wherein
the first time domain resource comprises M time intervals, the N physical channel units are located in N time intervals of the M time intervals, and M is a positive integer greater than or equal to N.

15. The terminal device according to claim 14, further comprising:
a receiving unit, configured to receive first configuration information, wherein the first configuration information indicates a value of N.

16. The terminal device according to claim 14 or 15, wherein the first time domain resource is a first subframe, the first subframe comprises six time intervals, and in the six time intervals:
a time interval 0 includes symbol 0 and symbol 1 in the first subframe;
a time interval 1 includes symbol 2 and symbol 3 in the first subframe;
a time interval 2 includes symbol 4, symbol 5, and symbol 6 in the first subframe;
a time interval 3 includes symbol 7 and symbol 8 in the first subframe;
a time interval 4 includes symbol 9 and symbol 10 in the first subframe; and
a time interval 5 includes symbol 11, symbol 12, and symbol 13 in the first subframe, or the time interval 5 includes symbol 11 and symbol 12 in the first subframe.

17. The terminal device according to claim 16, wherein
the processing unit is further configured to generate a physical channel whose channel structure is a first structure, a second structure, or a third structure, wherein
in the first structure, the physical channel includes one physical channel unit that is located in one of the six time intervals;
in the second structure, the physical channel includes two physical channel units that are located in the time interval 0 and the time interval 1, or the physical channel includes one physical channel unit that is located in the time interval 2, or the physical channel includes two physical channel units that are located in the time interval 3 and the time interval 4, or the physical channel includes one physical channel unit that is located in the time interval 5; and
in the third structure, the physical channel includes three physical channel units that are located in the time interval 0, the time interval 1, and the time interval 2, or the physical channel includes three physical channel units that are located in the time interval 3, the time interval 4, and the time interval 5.

18. The terminal device according to claim 14 or 15, wherein the first time domain resource is a first subframe,
the first subframe comprises eight time intervals, and in the eight time intervals:
the time interval 0 includes symbol 0 and symbol 1 in the first subframe;
the time interval 1 includes symbol 2 and symbol 3 in the first subframe;
the time interval 2 includes symbol 3 and symbol 4 in the first subframe;
the time interval 3 includes symbol 5 and symbol 6 in the first subframe;
the time interval 4 includes symbol 7 and symbol 8 in the first subframe;
the time interval 5 includes symbol 9 and symbol 10 in the first subframe;
the time interval 6 includes symbol 10 and symbol 11 in the first subframe; and
the time interval 7 includes symbol 12 and symbol 13 in the first subframe, wherein
symbol 3 is used to transmit reference signals of the time interval 1 and the time interval 2, and symbol 10 is used to transmit reference signals of the time interval 5 and the time interval 6.

19. The terminal device according to claim 18, wherein
the processing unit is further configured to generate a physical channel whose channel structure is a first structure, a second structure, or a third structure, wherein
in the first structure, the physical channel includes one physical channel unit that is located in one of the eight time intervals;
in the second structure, the physical channel includes two physical channel units that are located in the time interval 0 and the time interval 1, or the physical channel includes two physical channel units that are located in the time interval 2 and the time interval 3, or the physical channel includes two physical channel units that are located in the time interval 4 and the time interval 5, or the physical channel includes two physical channel units that are located in the time interval 6 and the time interval 7; and
in the third structure, the physical channel includes four physical channel units that are located in the time interval 0, the time interval 1, the time interval 2, and the time interval 3, or the physical channel includes four physical channel units that are located in the time interval 4, the time interval 5, the time interval 6, and the time interval 7.

20. The terminal device according to claim 14 or 15, wherein the first time domain resource is a first subframe,
the first subframe comprises seven time intervals, and in the seven time intervals:
the time interval 0 includes symbol 0 and symbol 1 in the first subframe;
the time interval 1 includes symbol 2 and symbol 3 in the first subframe;
the time interval 2 includes symbol 3 and symbol 4 in the first subframe;
the time interval 3 includes symbol 5 and symbol 6 in the first subframe;
the time interval 4 includes symbol 7 and symbol 8 in the first subframe;
the time interval 5 includes symbol 9 and symbol 10 in the first subframe; and
the time interval 6 includes symbol 10, symbol 11, and symbol 12 in the first subframe,
wherein
symbol 3 is used to transmit reference signals of the time interval 1 and the time interval 2, and symbol 10 is used to transmit reference signals of the time interval 5 and the time interval 6.

21. The terminal device according to claim 20, wherein
the processing unit is further configured to generate a physical channel whose channel structure is a first structure, a second structure, or a third structure, wherein
in the first structure, the physical channel includes one physical channel unit that is located in one of the seven time intervals;
in the second structure, the physical channel includes two physical channel units that are located in the time interval 0 and the time interval 1, or the physical channel includes two physical channel units that are located in the time interval 2 and the time interval 3, or the physical channel includes two physical channel units that are located in the time interval 4 and the time interval 5, or the physical channel includes one physical channel unit that is located in the time interval 6; and
in the third structure, the physical channel includes four physical channel units that are located in the time interval 0, the time interval 1, the time interval 2, and the time interval 3, or the physical channel includes three physical channel units that are located in the time interval 4, the time interval 5, and the time interval 6.

22. The terminal device according to claim 17, 19, or 21, further comprising:
the receiving unit, configured to receive second configuration information, wherein the second configuration information indicates a channel structure of the physical channel, and the channel structure is the first structure, the second structure, or the third structure, wherein
the processing unit is further configured to generate the physical channel based on the channel structure that is indicated by the second configuration information.

23. The terminal device according to any one of claims 14 to 22, wherein
N is greater than 1, and uplink control information carried by all the N physical channel units is the same; or
the N physical channel units respectively carry N pieces of coded information of uplink control information.

24. A network device, comprising:
a receiving unit, configured to receive a physical channel in a first time domain resource, wherein the physical channel includes N physical channel units, and N is a positive integer; and
a processing unit, configured to demodulate the physical channel, wherein
the first time domain resource comprises M time intervals, the N physical channel units are located in N time intervals of the M time intervals, and M is a positive integer greater than or equal to N.

25. The network device according to claim 24, further comprising:
a sending unit, configured to send first configuration information, wherein the first configuration information indicates a value of N.

26. The network device according to claim 24, further comprising:
a sending unit, configured to send second configuration information, wherein the second configuration information indicates a channel structure of the physical channel, and the channel structure is a first structure, a second structure, or a third structure.
